# EUROPÄISCHE PATENTANMELDUNG

(11) **EP 2 272 932 A1**
(43) Veröffentlichungstag der Anmeldung: **12.01.2011**
(21) Anmeldenummer: 10006220.7
(22) Anmeldetag: 16.06.2010
(51) Int. Cl.: C09J 101/00

(54) **Kleber für Tapeten**

(30) Priorität: 26.06.2009 DE 102009030867
(71) Anmelder: Erfurt & Sohn KG, D-42399 Wuppertal (DE)
(72) Erfinder: Arndt, Lothar, 58332 Schwelm (DE); Klix, Jürgen, 63927 Bürgstadt (DE)
(74) Vertreter: COHAUSZ DAWIDOWICZ HANNIG & SOZIEN

(57) **Zusammenfassung**

Die Erfindung betrifft einen Kleber (Kleister) auf Wasserbasis zum Befestigen von Bahnenware auf Flächen insbesondere von Tapeten auf Wänden, wobei der Kleber einen Zusatz als Spaltmittel aufweist, der nach dem Anbringen der Bahn insbesondere der Tapete und dem Trocknen des Klebers ein Trockenabziehen der Bahn insbesondere Tapete von der Wand ermöglicht, wobei der Kleber vor dem Anrühren mit Wasser aus einer trockenen Mischung oder aus einer flüssigen Konzentratmischung aus Kleber und Spaltmittel besteht.

## Beschreibung

Die Erfindung betrifft einen Kleber bzw. Kleister auf Wasserbasis zum Befestigen von Bahnenware auf Flächen insbesondere von Tapeten auf Wänden, wobei der Kleber einen Zusatz als Spaltmittel aufweist, der nach dem Anbringen der Bahn insbesondere der Tapete und dem Trocknen des Klebers ein Trockenabziehen der Bahn insbesondere Tapete von der Wand ermöglicht.

Es ist bekannt, einem wässrigen Tapetenkleber insbesondere einem Kleister ein Spaltmittel beizumischen, mit diesem Kleber die Rückseite einer Tapete zu bestreichen und die Tapete an einer Wand zu befestigen, so dass nach dem Trocknen des Klebers die Tapete von der Wand trocken abziehbar ist. Hierzu ist es erforderlich, zuerst einen pulverförmigen Tapetenkleister im richtigen Mischungsverhältnis mit Wasser anzurühren und in diesen wässrigen Kleister im richtigen Mischungsverhältnis das Spaltmittel einzurühren. Dieser Ablauf ist umständlich, zeitaufwendig und kann zu fehlerhaften Mischungsverhältnissen führen.

Aufgabe der Erfindung ist es, einen Tapetenkleber (Kleister) so zu verbessern, dass er einfach, leicht und fehlerfrei handhabbar ist.

Diese Aufgabe wird erfindungsgemäß dadurch gelöst, dass der Kleber vor dem Anrühren mit Wasser aus einer trockenen Mischung oder aus einer flüssigen Konzentratmischung aus Kleber und Spaltmittel besteht.

Ein solcher Kleber braucht vor dem Anrühren mit Wasser nicht mit einem Spaltmittel versehen werden, da das Spaltmittel im vorgeheizten, vorgemischten Zustand des Klebers bereits enthalten ist. Das vereinfacht die Verwendung des Klebers wesentlich und verhindert ein falsches Mischungsverhältnis. Hierbei besteht die in den Handel gebrachte Mischung entweder aus einer trockenen Mischung oder aus einer flüssigen Konzentrat-Mischung. Bei Einsatze eines Konzentrates vereinfacht sich die Anwendung zusätzlich, da es zu keinem Verklumpen kommen kann.

Vorzugsweise wird vorgeschlagen, dass der Kleber als Basisstoff Celluloseether wie Methylcellulose, Carboxymethylcellulose, Stärke insbesondere Kartoffelstärke, Polyvinylacetat, Polysaccharide und/oder Kunstharze aufweist.

Besonders vorteilhafte Spalteigenschaften werden erreicht, wenn der Kleber als Spaltmittel Seifen mit einem hydrophoben und hydrophilen Teil und/oder Nanopartikel insbesondere hohle Nanokugeln mit einer hydrophoben Substanz gefüllt und/oder Wachse aufweist. Hierbei sollten Basisstoff und Spaltmittel in einem Verhältnis von 1:1 bis 1:0,25 gemischt sein. Ein Kleisterkonzentrat wird ebenfalls vorzugsweise 1:10 bis 1:20 mit Wasser verdünnt.

Vorzugsweise wird vorgeschlagen, dass Hilfsmittel enthalten sind, die das Auflöseverhalten und/oder die Verarbeitbarkeit verbessern.

Ausführungsbeispiele der Erfindung werden im Folgenden näher beschrieben.

Der Kleber liegt vor seinem Gebrauch im trockenen Zustand pulverförmig vor, wobei er als Basisstoff folgende Mittel aufweist:
- Celluloseether wie Methylcellulose,
- Carboxymethylcellulose,
- Stärke insbesondere Kartoffelstärke,
- Polyvinylacetat,
- Polysaccharide und/oder Kunstharze.

Damit ist der Grundstoff des Klebers wasserlöslich.

Zusätzlich ist in den Basisstoff (Grundstoff) als Spaltmittel mindestens eines der folgenden Mittel eingemischt:
- Seifen mit einem hydrophoben und hydrophilen Teil und/oder
- Nanopartikel insbesondere hohle Nanokugeln mit einer hydrophoben Substanz gefüllt und/oder
- Wachse
- Wasserstoffbrücken bildende Substanzen wie Saccaride, die beim Trocknen teilweise kristallisieren, sind besonders vorteilhaft einsetzbar.

Hierbei ist auf ein Teil Basisstoff 0,25 bis ein Teil des Spaltmittels enthalten.

Vorzugsweise sind zusätzlich im Kleber Hilfsmittel enthalten, die das Auflöseverhalten und/oder die Verarbeitbarkeit verbessern.

Ein solcher Kleber bzw. Kleister in Pulverform oder als flüssiges Konzentrat wird vor seinem Gebrauch mit Wasser angerührt. Vorzugsweise werden auf ein Teil flüssigen oder pulverförmigen Klebers zehn bis zwanzig Teile Wasser hinzugegeben und eingerührt. Danach ist der Kleber gebrauchsfertig und kann auf die Rückseite der Bahnenware insbesondere einer Tapete oder eines Teppichs aufgebracht werden, um diese dann auf einer Fläche insbesondere an einer Wand, Decke oder einem Boden zu befestigen.

Nach dem Trocknen des Klebers ist ein sicherer Halt der Bahnenware auf der Fläche gegeben. Soll die Bahnenware entfernt werden, so kann sie im trockenen Zustand leicht von der Fläche abgezogen werden, ohne sie anfeuchten zu müssen. Das Trennmittel sorgt für eine Trennung innerhalb der trockenen Klebeschicht.

## Patentansprüche

1. Kleber (Kleister) auf Wasserbasis zum Befestigen von Bahnenware auf Flächen insbesondere von Tapeten auf Wänden, wobei der Kleber einen Zusatz als Spaltmittel aufweist, der nach dem Anbringen der Bahn insbesondere der Tapete und dem Trocknen des Klebers ein Trockenabziehen der Bahn insbesondere Tapete von der Wand ermöglicht, **dadurch gekennzeichnet, dass** der Kleber vor dem Anrühren mit Wasser aus einer trockenen Mischung oder aus einer flüssigen Konzentratmischung aus Kleber und Spaltmittel besteht.

2. Kleber nach Anspruch 1, **dadurch gekennzeichnet, dass** der Kleber vor dem Anrühren mit Wasser aus einer trockenen, pulverförmigen Mischung aus Kleber und Spaltmittel besteht.

3. Kleber nach Anspruch 1 oder 2, **dadurch gekennzeichnet, dass** der Kleber als Basisstoff Celluloseether wie Methylcellulose, Carboxymethylcellulose, Stärke insbesondere Kartoffelstärke, Polyvinylacetat, Polysaccharide und/oder Kunstharze aufweist.

4. Kleber nach einem der vorherigen Ansprüche, **dadurch gekennzeichnet, dass** der Kleber als Spaltmittel
- Seifen mit einem hydrophoben und hydrophilen Teil und/oder
- Nanopartikel insbesondere hohle Nanokugeln mit einer hydrophoben Substanz gefüllt und/oder
- Saccaride und/oder
- Wachse aufweist.

5. Kleber nach Anspruch 3 und 4, **dadurch gekennzeichnet, dass** Basisstoff und Spaltmittel in einem Verhältnis von 1:1 bis 1:0,25 gemischt sind.

6. Kleber nach einem der vorherigen Ansprüche, **dadurch gekennzeichnet, dass** Hilfsmittel enthalten sind, die das Auflöseverhalten und/oder die Verarbeitbarkeit verbessern.
